Europäisches Patentamt

European Patent Office

Office européen des brevets

(19)

(11) Numéro de publication: **0 280 889 B1**

# FASCICULE DE BREVET EUROPEEN

(12)

(45) Date de publication de fascicule du brevet:
30.10.91

(51) Int. Cl.5: **B60C 3/04**

(21) Numéro de dépôt: 88101431.0

(22) Date de dépôt: 02.02.88

(54) **Paire de pneumatiques pour deux roues.**

(30) Priorité: 23.02.87 FR 8702458

(43) Date de publication de la demande:
07.09.88 Bulletin 88/36

(45) Mention de la délivrance du brevet:
30.10.91 Bulletin 91/44

(84) Etats contractants désignés:
AT BE CH DE ES FR GB GR IT LI LU NL SE

(56) Documents cités:
GB-A- 2 117 330
GB-A- 2 120 178
GB-A- 2 128 556
US-A- 3 980 118

(73) Titulaire: COMPAGNIE GENERALE DES ETA-
BLISSEMENTS MICHELIN-MICHELIN & CIE
4, rue du Terrail
F-63000 Clermont-Ferrand(FR)

(72) Inventeur: Decima, François
5, boulevard du Puy Monteix
F-63000 Clermont-Ferrand(FR)
Inventeur: Rochon, Alain
18, rue des Petites Collanges
F-63119 Charteaugay(FR)

(74) Mandataire: Bauvir, Jacques et al
Michelin & Cie Service K. Brevets
F-63040 Clermont-Ferrand Cédex(FR)

Rank Xerox (UK) Business Services

## Description

La présente invention se rapporte aux pneumatiques à carcasse radiale conçus pour équiper les motos.

Le fonctionnement des pneumatiques montés sur des motos, et plus généralement sur les véhicules à 2 roues disposées l'une devant l'autre (vélos, motos) est tout à fait différent de celui des pneumatiques montés sur voitures, camions, remorques, etc...

En effet, les pneumatiques de la première catégorie sont utilisés selon un éventail très large d'angles dits de carrossage alors que les autres ne sont utilisés que dans des configurations où l'angle de carrossage est quasi nul, ou à tout le moins très faible.

Pour maintenir un véhicule sur sa trajectoire, les pneumatiques doivent développer des poussées transversales. Dans le premier cas, ces poussées sont principalement des poussées dites de carrossage (parce que induites par un angle de carrossage) alors que dans le second cas, ces poussées sont principalement des poussées dites de dérive (parce que induites par l'angle de dérive que fait la bande de roulement par rapport à la trajectoire).

Lorsque l'on a cherché à concevoir des pneumatiques à carcasse radiale pour les motos, on n'a pas retrouvé tous les avantages propres à cette technique rencontrés dans ses autres applications.

Ceci semble dû au fait que les poussées d'un pneumatique à carcasse radiale se développent d'une manière totalement différente de ce qui se passe pour un pneumatique dit croisé. En particulier, la part des poussées de carrossage est plus faible. Il en résulte un comportement dégradé, c'est-à-dire une aptitude de la moto à suivre la trajectoire imposée par le pilote détériorée. En particulier, on observe fréquemment des instabilités en ligne droite : la moto oscille autour de la trajectoire rectiligne souhaitée.

On a déjà tenté de remédier à ce problème en proposant des architectures de pneumatiques coordonnées pour les pneumatiques avant et arrière. Le brevet US 4 510 983 (correspondant au préambule de la revendication 1) donne une relation liant les angles des fils de renforcement de sommet pour le pneumatique avant et le pneumatique arrière. Cette proposition s'avère cependant insuffisante pour conférer un bon comportement, quelle que soit l'utilisation et/ou les autres constituants des pneumatiques.

Le but de la présente invention est de proposer une paire de pneumatiques pour moto qui puisse conférer à ladite moto un comportement d'une qualité largement améliorée.

L'objectif de l'invention est de pouvoir proposer une telle paire de pneumatiques conférant un bon comportement sans que le choix de cette paire ne soit conditionné de manière étroite par les caractéristiques de la moto du point de vue de ses suspensions et de la rigidité de son cadre.

L'objectif de la présente invention est encore de proposer une telle paire de pneumatiques dont le comportement ne se dégrade pas avec l'usure.

Paire de pneumatiques à carcasse radiale et à ceinture, destinée à constituer l'équipement pneumatique d'une moto, ladite ceinture comportant au moins des fils de renforcement à haut module d'élasticité comme par exemple en acier, en fibre de verre, en aramide, disposés dans la zone médiane dudit pneumatique, ledit pneumatique arrière ayant une réponse en dérive $\delta 1$, en fonction de l'angle de carrossage $\gamma$ donnée, et le pneumatique avant ayant une réponse en dérive $\delta 2w$ en fonction de l'angle de carrossage $\gamma$ donnée, caractérisée en ce que le pneumatique arrière est pourvu d'une ceinture comportant au moins des fils de renforcement orientés sensiblement parallèlment au plan équatorial dudit pneumatique et en ce que lesdites réponses en dérive $\delta 1, \delta 2$ en fonction de $\gamma$ sont telles que la différence $\delta 2 - \delta 2$ est une fonction monotonément croissante de $\gamma$.

Les figures suivantes permettent de bien comprendre les explications données ci-dessous.

La figure 1 représente schématiquement les angles et les forces à considérer lorsqu'une moto prend un virage.

La figure 2 illustre la réponse $\delta_2$ en fonction de l'angle de carrossage $\gamma$ pour un pneumatique avant.

La figure 3 illustre la réponse $\delta_1$ en fonction de l'angle de carrossage $\gamma$ pour un pneumatique arrière.

La figure 4 illustre la différence $\delta_2 - \delta_1$ en fonction de l'angle de carrossage $\gamma$ pour une paire de pneumatiques selon l'invention.

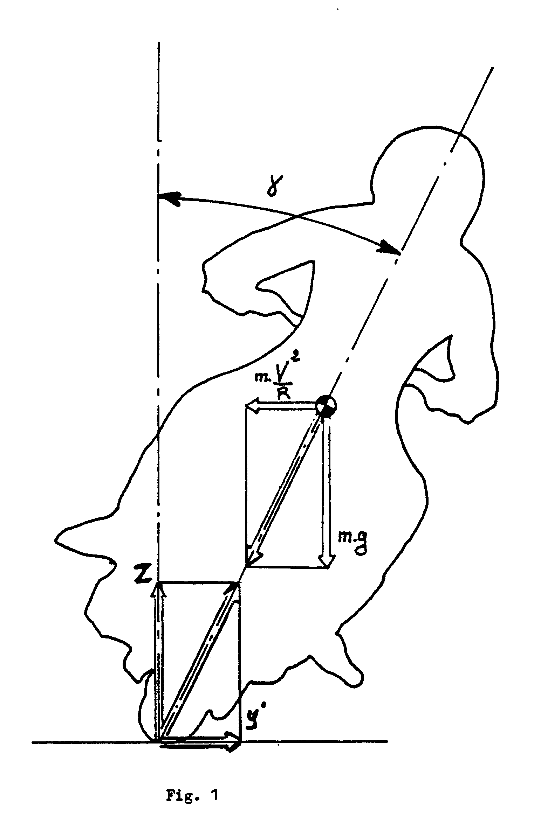

Comme on le voit à la figure 1, un véhicule à deux roues du type d'une moto est en équilibre lorsque la résultante des forces appliquée au centre de gravité passe par la ligne de jonction des points de contact de chacun des pneumatiques avec le sol. Du fait que la base de sustentation se réduit quasiment à une ligne, la condition d'équilibre ne peut être respectée en virage, sous l'effet de la force centrifuge, dont le module vaut

$$\frac{m\ V^2}{R}$$

que si la moto de masse m prend une inclinaison déterminée. En conséquence, le pneumatique est soumis à un angle de carrossage $\gamma$ imposé par la

vitesse V de la moto et le rayon du virage R. D'autre part, la maîtrise de la trajectoire impose que le pneumatique développe une poussée transversale y' parallèle à la force centrifuge et d'égale amplitude.

Du fait que ladite poussée transversale y' nécessaire ne correspond pas nécessairement à la poussée résultant de l'angle de carrossage $\gamma$, ceci est réalisé par une combinaison de poussées dites de carrossage et de dérive. Pour rappel, on définit la poussée de dérive comme étant celle que développe un pneumatique sous une charge Z déterminée et pour un angle de carrossage $\gamma$ nul et la poussée de carrossage comme étant celle que développe un pneumatique sous une charge Z déterminée et pour un angle de dérive $\delta$ nul.

On peut donc caractériser chaque pneumatique par une courbe de fonctionnement donnant l'angle de dérive $\gamma$ (sans couple moteur et en régime permanent).

Dans la suite de l'exposé, on utilisera les conventions suivantes : l'angle de carrossage $\gamma$ est positif pour un virage à droite, et l'angle de dérive $\delta$ est positif lorsque le pneumatique lui-même braque à gauche par rapport à la trajectoire définie par la courbe constamment tangente au vecteur vitesse.

Le relevé de la courbe donnant l'angle de dérive $\delta$ en fonction de l'angle de carrossage $\gamma$ peut se faire très simplement de la manière expliquée ci-dessous. Le pneumatique est mis en rotation sur une machine d'essai du type "rouleuse à volant" en imposant la vitesse de rotation correspondant à une vitesse linéaire V, et la charge verticale Z. Pour chaque valeur de l'angle de carrossage $\gamma$, on relève la poussée y' parallèle à l'axe de rotation du volant sur lequel le pneumatique est en rotation. Cette poussée y' ne correspond en général pas à la force centrifuge qui doit être compensée. Or, on a vu ci-dessus que l'angle de carrossage $\gamma$ est imposé par la force centrifuge (à charge donnée). On peut donc calculer la valeur théorique $y'_{th}$ correspondant à chaque angle considéré. Il suffit ensuite de régler l'angle de dérive $\delta$ pour que la poussée $y'_m$ mesurée corresponde à la valeur théorique $y'_{th}$. On obtient ainsi un relevé caractérisant un pneumatique par une mesure simple appréhendant le comportement réel du pneumatique. On a constaté que cette caractérisation ne varie que fort peu avec la vitesse, la charge et la pression. C'est pourquoi on l'utilise pour proposer une façon simple d'améliorer le comportement des motos.

On sait que le potentiel de poussée d'un pneumatique a une limite, qui est la limite d'adhérence : à carrossage et dérive donnés, la poussée latérale maximale permise dépend du couple moteur ou freineur appliqué. Donc, si les conditions de vitesse et de rayon sont données, l'angle de carrossage $\gamma$ est imposé et l'angle de dérive $\delta$ sera une propriété du pneumatique mesurable comme expliqué ci-dessus. Si on ajoute un effort moteur, la dérive va augmenter pour conserver la même poussée latérale. Puisque la dérive augmente, le glissement augmente et donc l'usure également. L'usure concerne donc surtout le pneumatique arrière, principalement sollicité par un couple sur une moto, à savoir le couple moteur transmis quasi en permanence. L'invention propose donc de disposer à l'arrière un pneumatique à carcasse radiale dont la ceinture comporte des fils de renforcement à haut module d'élasticité comme par exemple en acier, en fibre de verre, en aramide, orientés sensiblement parallèlement au plan équatorial dudit pneumatique, disposés dans la zone médiane du pneumatique, sous la partie de la bande de roulement en contact avec la route . Par fil de renforcement, on entend aussi bien des fils unitaires que des câbles de la carcasse, il lui confère une très bonne résistance à la centrifugation. Le caoutchouc, n'étant que très faiblement sollicité par la centrifugation, se trouve dans les meilleurs conditions possible pour résister à l'usure due au couple moteur. Grâce à ce type de renforcement, le pneumatique résiste donc très bien à l'usure en ligne droite. Par contre, la rigidité de dérive d'un tel pneumatique étant plus faible, ainsi qu'il est bien connu, il résiste moins bien à l'usure en virages dans les parties épaules de la bande de roulement. Comme tout pneumatique est amené à rouler bien plus souvent en ligne droite qu'en virage, cette architecture confère très avantageusement une usure très régulière . Dès lors, la réponse d'un tel pneumatique aux sollicitations transversales n'évolue pratiquement pas lorsque celui-ci s'use.

Pour assurer un bon comportement, on ne peut choisir indépendamment le pneumatique avant et le pneumatique arrière de la moto. On a proposé que les angles des fils de la ceinture du pneumatique avant et les angles des fils de la ceinture du pneumatique arrière respectent une relation donnée. Cependant, on a observé que cela ne permet pas toujours d'obtenir un comportement de grande qualité. Ceci est dû au fait que de nombreux paramètres influencent ce comportement. Si l'on peut prévoir l'influence de certains, il est difficile de prévoir le comportement globalement. C'est pourquoi l'invention propose une méthode permettant de choisir une paire de pneumatiques à partir d'une mesure effectuée indépendamment sur chacun de ceux-ci, permettant de tenir compte de leurs caractéristiques réelles.

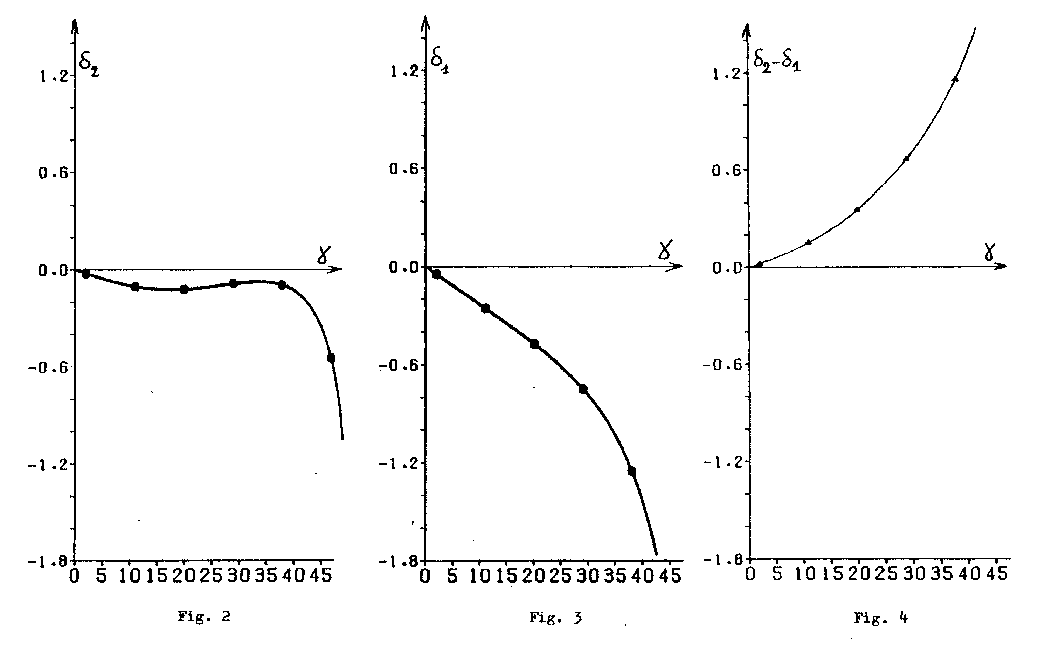

On relève les courbes $\delta$ en fonction de $\gamma$ pour chacun des pneumatiques comme expliqué ci-dessus : on obtient la courbe de fonctionnement $\delta_1 = f(\gamma)$ pour le pneumatique arrière et $\delta_2 = f(\gamma)$ pour

le pneumatique avant (voir figures 2 et 3).

En toute rigueur, l'angle de carrossage du pneumatique avant varie très légèrement en fonction de l'angle de braquage puisque la roue avant d'une moto a toujours un angle de chasse important. Cependant, l'angle de braquage est lui toujours très faible. Dès lors, cette variation est toujours très faible (on peut le démontrer très facilement en établissant la relation trigonométique liant les angles de carrossage, de braquage, et de chasse) et on peut considérer que l'angle de carrossage est identique pour le pneumatique avant pour le pneumatique arrière.

De manière préférentielle, on utilise des pneumatiques pour lesquels le rapport entre la hauteur et la largeur du pneumatique est compris entre 0,55 et 0,70.

L'un des deux pneumatiques étant choisi, il faut choisir l'autre pneumatique afin que la différence $\delta_2 - \delta_1$ soit une fonction momotonément croissante de $\gamma$. Avec l'architecture proposée pour le pneumatique arrière (ceinture à fils parallèles au plan équatorial, c'est-à-dire zéro degré), on observe sur la figure 3 que la poussée de carrossage est très insuffisante pour compenser la force centrifuge. En adoptant pour le pneumatique avant une ceinture dont les fils de renforcement sont orientés symétriquement par rapport au plan équatorial, on obtient très facilement un pneumatique dont la poussée de carrossage compense quasiment la force centrifuge sur une grande plage de valeurs de l'angle de carrossage $\gamma$. C'est ce que l'on observe sur la figure 2 pour un pneumatique dont les caractéristiques sont détaillées ci-dessous.

Une pair de pneumatiques respectant la relation énoncée est la suivante :

pneumatique arrière 160/60 VR 16 :

- 1 nappe carcasse en rayonne
- 1 nappe sommet à zéro degré en "Kevlar" (Marque déposée par Dupont de Nemours), s'étendant sur au moins 85 % de la largeur du pneumatique.

pneumatique avant 130/60 VR 16 :

- 1 nappe carcasse en rayonne
- 2 nappes sommet à 25° en "Kevlar", s'étendant sur au moins 85 % de la largeur du pneumatique.

La figure 4 donne la représentation résultante $\delta_2 - \delta_1$ en fonction de $\gamma$. Toutes les figures sont bien sûr symétriques par rapport à l'origine pour des pneumatiques symétriques.

**Revendications**

1. Paire de pneumatiques à carcasse radiale et à ceinture, destinée à constituer l'équipement pneumatique d'une moto, ladite ceinture comportant au moins des fils de renforcement à haut module d'élasticité comme par exemple en acier, en fibre de verre, en aramide, disposés dans la zone médiane dudit pneumatique, ledit pneumatique arrière ayant une réponse en dérive $\delta_1$, en fonction de l'angle de carrossage $\gamma$ donnée, et le pneumatique avant ayant une réponse en dérive $\delta_2$ en fonction de l'angle de carrossage $\gamma$ donnée, caractérisée en ce que le pneumatique arrière est pourvu d'une ceinture comportant au moins des fils de renforcement orientés sensiblement parallèlment au plan équatorial dudit pneumatique et en ce que lesdites réponses en dérive $\delta_1, \delta_2$ en fonction de $\gamma$ sont telles que la différence $\delta_2 - \delta_1$ est une fonction monotonément croissante de $\gamma$.

2. Paire de pneumatiques selon la revendication 1, caractérisée en ce que le pneumatique avant est pourvu d'une ceinture comportant des fils de renforcement orientés symétriquement par rapport au plan équatorial.

3. Paire de pneumatiques selon l'une des revendications 1 ou 2, caractérisée en ce que, pour chacun des pneumatiques, le rapport de la hauteur dudit pneumatique par la largeur dudit pneumatique est compris entre 0,55 et 0,70.

**Claims**

1. A pair of radial ply belted tyres to be mounted on a motorcycle, said belt having at least reinforcement threads with a high modulus of elasticity, such as, for example, steel, fiber glass or aramid, placed in the median zone of the tyre, said rear tyre having a given slip angle $\delta_1$ as a function of camber angle $\gamma$, and said front tyre having a given slip angle $\delta_2$ as a function of a camber angle $\gamma$, characterized by the fact that the rear tyre includes a belt having reinforcement threads oriented approximately parallel to an equatorial plane of said tyre and by the fact that said slip angles $\delta_1, \delta_2$ as a function of camber angle $\gamma$ are such that $\delta_2 - \delta_1$ is an invariably increasing function of $\gamma$.

2. A pair of tyres according to claim 1, characterized by the fact that said front tyre includes at least one belt having reinforcement threads oriented symmetrically in relation to the equatorial plane of said front tyre.

3. A pair of tyres according to claims 1 or 2,

7       EP 0 280 889 B1       8

characterized by the fact that a ratio of the height of each of said front and rear tyres to the width thereof is between 0.55 and 0.70.

**Patentansprüche**

1.  Luftreifenpaar mit radialer Karkasse und einem Gürtel, das die Bereifung eines Motorrades bildet, wobei der Gürtel wenigstens Verstärkungsfasern mit hohem Elastizitätsmodul, beispielsweise aus Stahl, aus Glasfasern oder aus Aramid, aufweist, die in der mittleren Zone des Luftreifens angeordnet sind, wobei der hintere Luftreifen ein Abdriftverhalten $\delta 1$ in Abhängigkeit vom gegebenen Radsturzwinkel $\gamma$ besitzt und der vordere Luftreifen ein Abdriftverhalten $\delta 2$ in Abhängigkeit vom gegebenen Radsturzwinkel $\gamma$ besitzt, dadurch gekennzeichnet, daß der hintere Luftreifen mit einem Gürtel versehen ist, der wenigstens Verstärkungsfasern aufweist, die im wesentlichen parallel zur Äquatorebene des Luftreifens orientiert sind, und daß das entsprechende Abdriftverhalten $\delta 1$, $\delta 2$ in Abhängigkeit von $\gamma$ derart ist, daß die Differenz $\delta 2 - \delta 1$ eine monoton steigende Funktion von $\gamma$ ist.

2.  Luftreifenpaar gemäß Anspruch 1, dadurch gekennzeichnet, daß der vordere Luftreifen mit einem Gürtel versehen ist, der Verstärkungsfasern aufweist, die in bezug auf die Äquatorebene symmetrisch orientiert sind.

3.  Luftreifenpaar gemäß einem der Ansprüche 1 oder 2, dadurch gekennzeichnet, daß für jeden der Luftreifen das Verhältnis der Höhe des Luftreifens zur Breite des Luftreifens zwischen 0,55 und 0,70 liegt.

Fig. 1

Fig. 4

Fig. 3

Fig. 2